# EUROPEAN PATENT APPLICATION

(11) **EP 4 371 389 A1**
(43) Date of publication of application: **22.05.2024**
(21) Application number: 22207468.4
(22) Date of filing: 15.11.2022
(51) Int. Cl.: A01D 1/00, A01D 34/00, A01D 41/00, A01D 41/06, A01D 41/127, A01D 43/00, A01D 57/02

(54) **SYSTEM AND METHOD FOR SENSOR-BASED MONITORING OF A HARVESTING OPERATION**

(71) Applicant: CNH Industrial Belgium N.V., 8210 Zedelgem (BE)
(72) Inventor: Deruyter, Lucas, 8830 Gits (BE); Verschaeve, Bertl, 8830 Gits (BE); Missotten, Bart M.A., 3020 Herent (BE); Vandewalle, Bert, 8820 Torhout (BE)
(74) Representative: CNH Industrial IP Department

(57) **Abstract**

A system (200) for sensor-based monitoring of a harvesting operation according to the present invention comprises a header (110) having a rotating reel (116), an optical sensor (204, 206, 208) and a rotational reel position sensor (202). The optical sensor (204, 206, 208) is configured to capture optical data in response to a trigger signal associated with an output signal of the position sensor (202) indicative of a rotational position of the reel (116). A method (300) according to the present invention comprises the steps of triggering the optical sensor (204, 206, 208) when the reel (116) is arranged in at least one predetermined rotational position and capturing optical data by the optical sensor (204, 206, 208) when triggered.

## Description

The present invention relates to a system and a method for sensor-based monitoring of a harvesting operation, in particular of a header configured to be used on an agricultural harvester, such as a combine or windrower.

An agricultural harvester known as a "combine" is historically termed such because it combines multiple harvesting functions with a single harvesting unit, such as picking, threshing, separating, and cleaning. A combine includes a header which removes the crop from a field and a feeder housing which transports the crop material into a threshing rotor. The threshing rotor rotates within a perforated housing, which may be in the form of adjustable concaves, and performs a threshing operation on the crop to remove the grain. The threshing rotor is provided with rasp bars that interact with the crop material in order to further separate the grain from the crop material, and to provide positive crop movement. Once the grain is threshed, the grain is cleaned using a cleaning system. The cleaning system includes a cleaning fan which blows air through oscillating sieves to discharge chaff and other debris toward the rear of the combine. Non-grain crop material, such as straw, from the threshing section proceeds through a straw chopper and out the rear of the combine. Clean grain is transported to a grain tank onboard the combine.

A typical header generally includes a frame, a pair of end dividers at the lateral ends of the frame, a floor such as a deck, a cutter to remove crop material from the field, and a conveyor to transport the cut crop material to the feeder housing for further downstream processing in the combine. Generally, the components of a header are specifically optimized to harvest a particular kind of crop. For instance, the header may be in the form of a draper header which has a cutter bar, a draper belt, and a rotating reel with tines or the like in order to harvest a bushy or fluffy crop, such as soybeans or canola. Alternatively, the header may be in the form of a corn header which includes an auger and row units with snouts, gathering chains, and stalk rolls in order to harvest corn.

Within the industry, there is an ever-increasing demand for systems designed to automatically control the operation of components associated with agricultural vehicles, including components associated with headers of agricultural harvesters. Typically, automated header-related systems rely on the use of sensors or sensing devices to provide feedback associated with a monitored parameter, e.g. of the environment, the crop material or the header, or an operating condition of the header, which then allows a control unit to automatically determine control outputs for controlling the operation of one or more components of the header based on the feedback received from the sensor(s) or sensing device(s). However, when a header includes powered components (e.g., powered rotating components), the motion of such components often results in a significant amount of noise or interference within the sensor feedback provided to the controller. This noise/interference in the sensor feedback often results in the controller generating control outputs that are not as accurate or effective as desired.

To avoid such noise or interference, systems are known in which the sensor(s) or sensing device(s) are either mounted high enough, such that their field of view is above any powered component of the header and therefore directed far in front of the header, or they are mounted in front of the powered component. Having a field of view directed above and far in front of the header makes it difficult to monitor the direct environment of the header. Moreover, quite big mechanical constructions are required in either case, which form additional obstructions on the header periphery potentially interfering with obstacles, such as trees and bushes on an outer edge of the field.

On the other hand, sensor(s) or sensing device(s) having a powered component, such as a reel of the header, in their field of view usually generate a continuous datastream. When the sensor(s) is mounted inside the reel, frames captured by the sensor(s) are likely to have a slightly different view of the environment depending on the aquisition frame rate of the sensor(s) and the reel speed. Utilizing sensors fixedly mounted on the header results in movement of the powered component through the field of view of the sensor(s) and requires increasingly complex data processing and algorithms for precise and reliable monitoring, if the area of the powered component should not be neglected.

It is an object of the present invention to provide a system and method for sensor-based monitoring of a harvesting operation overcoming the above mentioned drawbacks of prior art systems and methods.

This object is solved by the subject matter of independent claims 1 and 13. Preferred embodiments are subject of the dependent claims.

According to one aspect of the present invention, a system for sensor-based monitoring of a harvesting operation comprises a header comprising a frame and a reel rotatably supported relative to the frame, at least one optical sensor configured to capture optical data within a field of view of the at least one optical sensor, wherein the reel is partially arranged within or movable through the field of view of the at least one optical sensor, and a rotational reel position sensor configured to detect a rotational position of the reel. The system is configured to trigger the at least one optical sensor in a predetermined rotational position of the reel based on the detected rotational position.

Hence, the at least one optical sensor is triggered to capture optical data, such as image data, in at least one predetermined position of the reel. In this way, data acquisition by the at least one optical sensor is synchronized with the rotation and rotational position of the reel. As a result, the reel or parts of it appear on the captured data, if at all, in a static position. Data processing and development of related algorithms can thus be facilitated without the need to position the at least one optical sensor in a location in which the reel does not interfere with the sensor's field of view.

In a preferred embodiment, an output signal of the at least one rotational reel position sensor is indicative of a rotational position of the reel and the at least one optical sensor is configured to capture optical data in response to a trigger signal associated with the output signal of the rotational reel position sensor. In other words, the trigger signal is provided based on the output signal of the rotational reel position sensor when the reel is in at least one predetermined position.

Preferably, the at least one optical sensor is configured to capture optical data only in response to the trigger signal, i.e. to capture successive discrete frames. Therefore, the at least one optical sensor does not generate a continuous datastream of optical data in which the reel (component) appears in different positions.

The field of view of each of the at least one optical sensor is the area of inspection captured by the sensor. The field of view may be defined by a solid angle through which the optical sensor is sensitive to electromagnetic radiation.

The reel may comprise a reel shaft and a plurality of tine bars extending in a transverse direction of the header. The reel shaft defines a reel axis being a rotational axis of the reel. Each of the tine bars is preferably provided with a plurality of tines. Usually, the plurality of tine bars are distributed around the reel axis and are equally spaced apart from each other in a circumferential direction of the reel. The reel may further comprise a first and a second end plate and at least one support structure located between the first and second end plates in a axial direction of the reel axis to support the plurality of tine bars.

The rotational position of the reel may be defined by an angular position of at least one of the tine bars with respect to the reel axis. The rotational reel position sensor may therefore be configured to detect an angular position of at least one tine bar. In particular, the rotational reel position sensor may be configured to detect the at least one tine bar in a predetermined angular position. The output signal of the rotation reel position sensor is therefore indicative of an angular position of the at least one tine bar. In other words, the output signal may indicate that the at least one tine bar is arranged in the predetermined angular position. This may apply for some or all of the plurality of tine bars in an analogous manner. That is, the rotational reel position sensor may be configured to detect each of the tine bars in the predetermined angular position, such that the output signal indicates that one of the tine bars is arranged in the predetermined angular position. The at least one optical sensor is therefore triggered to capture optical data based on the predetermined angular position of at least one of the tine bars.

The rotational reel position sensor may be assigned to the reel shaft in order to detect the rotational position of the reel. Alternatively, the rotational reel position sensor may be arranged adjacent to an outer circumference of the reel and may be configured to detect a tine bar passing by the rotational reel position sensor. In this case, the rotational reel position sensor may be arranged in close proximity to a trajectory of the tine bars around the reel axis. It is apparent for the person skilled in the art that the rotational reel position sensor may be assigned to any rotating part of the reel in order to detect its rotational position. The rotational reel position sensor may therefore interact directly with a part of the reel, such as the tine bars, or at least one marking may be provided on the reel interacting with the rotational reel position sensor. A plurality of rotational reel position sensors may be provided, if desired.

In an exemplary embodiment, the rotational reel position sensor is an encoder detecting the rotational position of the reel and providing the output signal based thereon. Preferably, the rotational reel position sensor comprises one of an inductive sensor, a magnetic sensor, an optical sensor or a mechanical sensor. For example, the rotational reel position sensor comprises an inductive sensor arranged adjacent to the trajectory of the tine bars around the reel axis to detect each tine bar passing by the sensor. The rotational reel position sensor may generate a pulse for each tine bar passing the sensor, thus generating a pulse signal indicative of the rotational reel position. The output signal may therefore be a pulse signal indicative of the position of a tine bar in an angular position, which corresponds to the position of the rotational reel position sensor.

In one embodiment, the system further comprises a control unit communicatively coupled to the at least one optical sensor and the rotational reel position sensor, wherein the control unit is configured to trigger the at least one optical sensor by providing the trigger signal based on the output signal of the rotational reel position sensor. The control unit may be a electronic control unit (ECU). In particular, the control unit is configured to trigger the at least one optical sensor in the at least one predetermined rotational position of the reel. The rotational reel position sensor provides the output signal to the control unit, which in turn provides the trigger signal to the at least one optical sensor. Utilizing the control unit in this way allows for flexibly adjusting the moment of capturing the optical data by the at least one optical sensor with respect to the position of the reel. For example, a position of the reel with respect to the at least one optical sensor may change during operation of the header and the moment of capturing the optical data can be adapted accordingly as described further below.

In general, the system according to the present invention facilitates data processing due to the static position of the reel in the optical data captured by the optical sensor.

The interference of the reel can further be minimized by defining an optimal rotational position of the reel for each of the at least one optical sensor depending on the structure of the reel and on the field of view of the at least one optical sensor. For example, the optimal rotational position of the reel may be a position, in which the reel or a component of the reel, such as a tine bar, do not appear in the field of view or do only temporarily or partially appear in the field of view. The trigger signal may then be associated with the optimal rotational position of the reel. That is, the at least one optical sensor is triggered when the reel is in the optimal rotational position.

If the optimal rotational position of the reel corresponds to the rotational position detected by the rotational reel position sensor, the output signal indicates the optimal rotational position. Therefore, the trigger signal may be directly provided in response to the output signal, e.g. by the control unit. In this case, the output signal may be a pulse signal, which may also be used as the trigger signal.

However, the optimal rotational position of the reel may not always correspond to the rotational position detected by the rotational reel position sensor. This may be the case when there are only limited options for mounting the rotational reel position sensor, when the position of the reel changes during operation, or when more than one optical sensor is provided. The control unit is preferably configured to receive the output signal of the rotational reel position sensor and to provide the trigger signal to the at least one optical sensor after a delay depending on the optimal rotational position. In other words, the control unit adds a delay to the output signal to generate the trigger signal to the at least one optical sensor, such that the at least one optical sensor is triggered when the reel is arranged in the optimal rotational position. The delay more particularly depends on a rotational speed of the reel as well as on an angular distance between the rotational position of the reel detected by the rotational reel position sensor and the predefined optimal rotational position. The control unit may be configured to adapt the delay to the current rotational speed of the reel.

During operation of the header or between a first harvesting operation and a second harvesting operation, the position of the reel in a vertical and/or a horizontal direction may change to optimize harvesting. In this case, the position of the reel relative to the at least one optical sensor also changes. Since the reel or reel components would still appear in a static position in the captured data, this may not cause problems with regard to data processing and evaluation. However, results may be improved by adapting the trigger signal and, thus, the moment of capturing the optical data accordingly. In a preferred embodiment, the control unit is therefore configured to receive the output signal of the rotational reel position sensor and to provide the trigger signal to the at least one optical sensor after a delay depending on the horizontal and/or the vertical position of the reel.

For example, an optimal rotational position of the reel may be determined for each position the reel usually takes during normal operation. Alternatively, an optimal rotational position of the reel may be defined for a reference position of the reel in the vertical and/or horizontal direction. The control unit may then be configured to determine the delay depending on the actual position of the reel relative to the reference position of the reel. Generally speaking, the delay may be pre-defined, e.g. stored in a lookup table in a memory of the control unit, or may be determined based on the actual position of the reel.

Preferably, the at least one optical sensor is mounted on the header and/or an agricultural vehicle carrying the header, e.g. on a cabin of the agricultural vehicle, wherein the field of view of the at least one optical sensor is directed towards a front of the header. In this way, the at least one optical sensor is capable of capturing optical data of a ground surface and/or crop material in front of the header in order to detect obstacles, ground characteristics, or crop characteristics, etc.. The at least one optical sensor may be attached to the header or the agricultural vehicle in a stationary position without the need of complex or large mountings. The environment close to the header can be monitored by mounting the at least one optical sensor behind the reel of the header in a direction of travel of the agricultural vehicle.

In addition or alternatively, the at least one optical sensor may be mounted on or within the reel, wherein the field of view of the at least one optical sensor is directed in a radial direction of the reel. Preferably, the at least one optical sensor is then mounted on the reel shaft. Hence, the at least one optical sensor and thus its field of view rotates with the reel around the reel axis. By triggering the at least one optical sensor in different rotational positions of the reel, the field of view is directed towards different objects of interest, such as an area in front of the reel, the ground surface, or a header component, such as a cutter bar, a conveyor or an auger, and optical data thereof is captured. As a result, optical data of different areas and components can be captured by a single optical sensor. The control unit may therefore be configured to provide the trigger signal in a rotational position of the reel, in which the field of view of the at least one optical sensor is directed towards the area or object of interest.

In general, the control unit may be configured to trigger the at least one optical sensor in a first rotational position of the reel and in a second rotational position of the reel, or in even more rotational positions of the reel as desired as described in the following.

In a case, in which the at least one optical sensor is mounted on a header component other than the reel or on the agricultural vehicle, the number of rotational positions of the reel in which the at least one optical sensor is triggered may correspond to the number of tine bars. The at least one optical sensor may then be triggered every time the reel has moved about the angular distance between two adjacent tine bars. In the optical data captured by the at least one optical sensor, the reel and in particular the tine bars will then appear in a static position. It is apparent that the number of rotational positions may be any number between one and the number of tine bars as long as the optical sensor is triggered when a tine bar in its field of view is in a predetermined position in all subsequent frames captured by the sensor.

In a case, in which the at least one optical sensor is mounted on or within the reel, the orientation of the field of view of the at least one optical sensor in the first rotational position of the reel may be different from the orientation of the field of view in the second rotational position of the reel. In this way, different sensor views can be generated by a single optical sensor.

The at least one optical sensor may be any suitable optical sensor capable of capturing the desired optical data, in particular of detecting electromagnetic waves. For example, the at least one optical sensor comprises one or a combination of a radar sensor, a lidar sensor, a laser sensor, and a camera. An ultrasonic sensor may also be used.

The present invention also relates to an agricultural vehicle comprising the system according to the invention. Hence, all features and advantages of the system described herein apply to the agricultural vehicle and vice versa. In particular, the agricultural vehicle is configured to carry the header comprising the reel as described above.

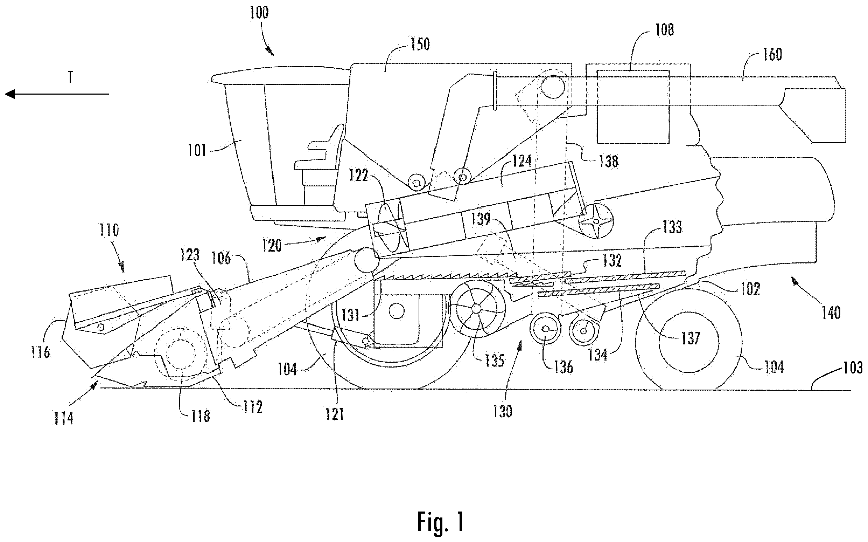

For example, the agricultural vehicle may be a combine or a windrower. The agricultural vehicle may comprise a cabin accommodating an operator of the agricultural vehicle. The general structure of a combine as one embodiment of the agricultural vehicle is described under reference to figure 1 in greater detail.

According to the present invention, a method for sensor-based monitoring of a harvesting operation comprises the steps of:
operating a header and thereby rotating a reel of the header around a reel axis;
detecting a rotational position of the reel by a rotational reel position sensor while the reel is rotating;
triggering at least one optical sensor when the reel is arranged in at least one predetermined rotational position; and
capturing optical data by the at least one optical sensor when triggered.

In this way, data acquisition by the at least one optical sensor is synchronized with the rotation and rotational position of the reel. As a result, the reel or parts of it appear on the captured data, if at all, in a static position. Data processing and development of related algorithms can thus be facilitated without the need to position the at least one optical sensor in a location in which its field of view does not interfere with the reel. Preferably, the at least one optical sensor captures optical data only when triggered, i.e. captures successive discrete frames. Therefore, the at least one optical sensor does not generate a continuous datastream.

Preferably, the method is carried out by a system according to the present invention as described herein or an agricultural vehicle comprising such system. Hence, all features and advantages of the system apply to the method and vice versa. Moreover, all functions and actions of the system according to the present invention and its components may be formulated as steps of the method as well.

The reel may be rotated by a drive mechanism of the header. The drive mechanism may be coupled to a PTO of an agricultural vehicle carrying the header.

In the method, the step of triggering the at least one optical sensor may be repeated each time the reel is in the at least one predetermined rotational position.

Preferably, the method further comprises the steps of:
generating the output signal indicative of at least one rotational position of the reel detected by the rotational reel position sensor and providing the output signal to the control unit;
generating the trigger signal based on the output signal by the control unit and providing the trigger signal to the at least one optical sensor thereby triggering the at least one optical sensor; and
capturing optical data by the at least one optical sensor in response to the trigger signal.

The control unit may further provide the trigger signal to the at least one optical sensor with a delay depending on the horizontal and/or vertical position of the reel or depending on an optimal rotational position of the reel as described above.

Preferred embodiments of the present invention will now be described referring to the accompanying drawings. It should be understood, however, that the invention is not limited to the precise arrangements, dimensions, and instruments shown. Like numerals indicate like elements throughout the drawings.
- Fig. 1: is a side view of an exemplary embodiment of an agricultural vehicle including a header.
- Fig. 2: is a side view of an exemplary embodiment of a system according to the present invention comprising the header of figure 1.
- Fig. 3: is a side view of an alternative embodiment of a system according to the present invention comprising the header of figure 1.
- Fig. 4a, b: are side views of the system of Fig. 2 with a reel of the header being displaced in different positions.
- Fig. 5: is a side view of the header with a reel of the header and an optical sensor of the system being displaced in a different position.
- Fig. 6: is a diagram for describing an exemplary embodiment of a method according to the present invention.

The terms "forward", "rearward", "left" and "right", when used in connection with the agricultural harvester and/or components thereof are usually determined with reference to the direction of forward operative travel T of the harvester, but they should not be construed as limiting. The terms "longitudinal" and "transverse" are determined with reference to the fore-and-aft direction T of the agricultural harvester and are equally not to be construed as limiting.

Referring to Fig. 1, there is shown an exemplary embodiment of an agricultural vehicle 100 in the form of a combine 100. However, the agricultural vehicle 100 may be in the form of any desired agricultural vehicle 100, such as a windrower. The agricultural vehicle 100 may generally include a cabin 101, a chassis 102, ground engaging wheels and/or tracks 104, a feeder housing 106, and an engine 108. The combine 100 may also include a header 110, a separating system 120, a cleaning system 130, a discharge system 140, an onboard grain tank 150, and an unloading auger 160. During operation, the combine 100 moves in a direction of travel T parallel to a fore-to-aft direction (longitudinal direction) of the combine 100 on the ground surface 103.

The separating system 120 may be of the axial-flow type, and thereby may include an axially displaced threshing rotor 122 which is at least partially enclosed by a rotor housing 124. The rotor housing 124 can include a rotor cage and perforated concaves. The cut crop is threshed and separated by the rotation of rotor 122 within the rotor housing 124 such that larger elements, for example stalks, leaves, and other MOG is discharged out of the rear of agricultural vehicle 100 through the discharge system 140. Smaller elements of crop material, such as grain and non-grain crop material, including particles lighter than grain, such as chaff, dust and straw, may pass through the perforations in the concaves and onto the cleaning system 130.

The cleaning system 130 may include a grain pan 131, a sieve assembly which can include an optional pre-cleaning sieve 132, an upper sieve 133 (also known as a chaffer sieve), a lower sieve 134 (also known as a cleaning sieve), and a cleaning fan 135. The grain pan 131 and pre-cleaning sieve 132 may oscillate in a fore-to-aft manner to transport the grain and finer non-grain crop material to the upper sieve 133. The upper sieve 133 and lower sieve 134 are vertically arranged relative to each other, and may also oscillate in a fore-to-aft manner to spread the grain across sieves 133, 134, while permitting the passage of clean grain, by gravity, through openings in the sieves 133, 134. The fan 135 may provide an airstream through the sieves 132, 133, 134 to blow non-grain material, such as chaff, dust, and other impurities, toward the rear of the agricultural vehicle 100.

The cleaning system 130 may also include a clean grain auger 136 positioned crosswise below and toward the front end of the sieves 133, 134. The clean grain auger 136 receives clean grain from each sieve 133, 134 and from a bottom pan 137 of the cleaning system 130. The clean grain auger 136 conveys the clean grain laterally to a generally vertically arranged grain elevator 138 for transport to the grain tank 150. The cleaning system 130 may additionally include one or more tailings return augers 139 for receiving tailings from the sieves 133, 134 and transporting these tailings to a location upstream of the cleaning system 130 for repeated threshing and/or cleaning action. Once the grain tank 150 becomes full, the clean grain therein may be transported by the unloading auger 160 into a service vehicle.

Preferably, the header 110 is removably attached to the feeder housing 106. The header 110 may generally include a frame 112, a cutter bar 114 that severs the crop from a field, a rotatable reel 116 rotatably mounted to the frame 112, which feeds the cut crop into the header 110, and a conveyor 118, e.g. an auger 118 with flighting or a belt system, that feeds the severed crop inwardly from each lateral end of the frame 112 toward feeder housing 106.

The header 110 may be in the form of any desired header, such as a draper header or a corn header. As can be appreciated, the header 110 may be at least partially lifted or carried by the feeder housing 106, which typically includes an actuating system with one or more hydraulic cylinders. In one embodiment, the actuating system may be used to adjust a height of the header 110 relative to the ground so as to maintain the desired cutting height between the header 110 and the ground. For instance, as shown in Fig. 1, the actuating system may include a height cylinder 121 (e.g., coupled between the feeder housing 106 and a portion of the chassis 102 of the vehicle 100) that is configured to adjust the height or vertical positioning of the header 110 relative to the ground by pivoting the feeder housing 106 to raise and lower the header 110 relative to the ground. In addition, the actuating system may also include a tilt cylinder(s) 123 coupled between the header 110 and the feeder housing 106 to allow the header 110 to be tilted relative to the ground surface or pivoted laterally or side-to-side relative to the feeder housing 106.

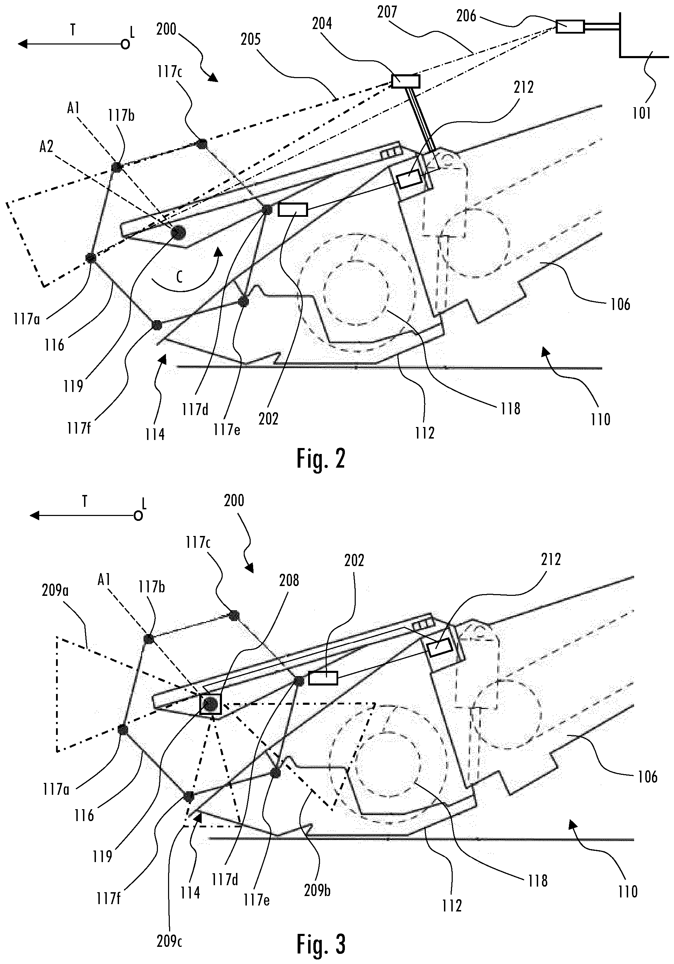

In Fig. 2 to 5 the header 110 or components thereof are shown in greater detail in a side view according to Fig. 1. A system 200 for sensor-based monitoring according to the present invention comprises the header 110, a rotational reel position sensor 202 configured to detect a rotational position of the reel 116 and at least one optical sensor 204, 206, 208 configured to capture optical data, such as image data, within a field of view of the sensor 204, 206, 208.

The reel 116 may comprise a plurality of tine bars 117 and a reel shaft 119 defining a reel axis. In the example shown, six tine bars 117a to 117f are provided. The plurality of tine bars 117 extend parallel to the reel axis and in a transverse direction L of the header 110 corresponding to a left-right-direction of the agricultural vehicle 100. The transverse direction L is perpendicular to the direction of travel T. The tine bars 117 are spaced apart from each other in a circumferential direction C of the reel 116 and are arranged at an equal distance from the reel axis. An angular position of at least one of the tine bars 117 with respect to the reel axis indicates a rotational position of the reel 116.

In general, the rotational reel position sensor 202 is configured to provide an output signal indicative of a rotational position of the reel 116. Therefore, the rotational reel position sensor 202, which may be configured as an encoder, could be assigned to the reel shaft 119 or to an end plate (not shown) of the reel 116 to detect a rotational position of the reel 116. Alternatively, as shown in Fig. 2 and 3, the rotational reel position sensor 202 may be arranged adjacent to an outer circumference of the reel 116 and configured to detect a tine bar 117 passing by the rotational reel position sensor 202. The rotational reel position sensor 202 is thus configured to detect a tine bar 117 in a predetermined angular position. For example, the rotational reel position sensor 202 may generate a pulse each time a tine bar 117 passes by the rotational reel position sensor 202 thereby indicating that the tine bar 117 is arranged in a position corresponding to a position of the rotational reel position sensor 202.

In Fig. 2 and 3, tine bar 117d is arranged in front of rotational reel position sensor 202, i.e. in the predetermined angular position corresponding to the position of the rotational reel position sensor 202. Therefore, the angular position of the tine bar 117d is detected, which also defines angular positions of tine bars 117a, b, c and 117 e, f as well as a rotational position of the reel 116. Since the tine bars 117 are equally distributed around the reel axis, every time a tine bar 117 is detected by the rotational reel position sensor 202, the reel 116 is arranged in a rotational position, in which the tine bars 117 are located in respective angular positions with respect to the reel axis. Although each tine bar 117 moves to the next angular position in the direction of rotation, i.e. to the previous angular position of the tine bar moving ahead, the reel 116 appears in static position.

For example, in Fig. 2 and 3, every time a tine bar 117 is detected by the rotational reel position sensor 202 one of the tine bars 117 is positioned in a first angular position A1 with respect to the reel axis. In the present embodiment, the reel 116 comprises six tine bars 117a to 117f, wherein an angle between two adjacent tine bars 117 about the reel axis is 60°. Hence, every time the reel 116 rotates about 60°, one tine bar 117 of the plurality of tine bars 117a to 117f will be arranged in the first angular position A1.

The system 200 further comprises the at least one optical sensor 204, 206, 208 for capturing optical data. For example, the at least one optical sensor 204, 206, 208 is a camera for capturing image data. For the purpose of illustrating different embodiments of the at least one optical sensor 204, 206, 208, a first optical sensor 204 and a second optical sensor 206 are shown in Fig. 2 and a third optical sensor 208 is shown in Fig. 3. The at least one optical sensor 204, 206, 208 may comprise any of the first, the second and the third optical sensor 204, 206, 208 or any combination thereof. Of course, different positions and orientations of the optical sensor compared to those shown in Fig. 2 and 3 are conceivable as well.

The first optical sensor 204 has a first field of view 205 in which it is capable of capturing optical data. The first optical sensor 204 may be mounted on the header 110, in particular on the frame 112 or on a housing of the header 110. The first field of view 205 may be directed towards a front of the header 110 in the direction of travel T. The first optical sensor 204 may be configured to monitor a region in front of the header 110, e.g. for detecting obstacles in a path of movement of the agricultural vehicle 100 or for detecting crop characteristics. The reel 116 is partially located in and moves through the first field of view 205.

The second optical sensor 206 has a second field of view 207 in which it is capable of capturing optical data. The second optical sensor 206 may be mounted on the agricultural vehicle 100, e.g. on the cabin 101 of the agricultural vehicle 100. The second field of view 207 may also be directed towards the front of the header 110 in the direction of travel T. Again, the reel 116 is partially located in and moves through the second field of view 207.

The third optical sensor 208 has a third field of view 209 in which it is capable of capturing optical data. The third optical sensor 208 may be mounted on the reel 116, in particular within the reel 116, i.e. within a space surrounded by the tine bars 117. For example, the third optical sensor 208 may be mounted on the reel shaft 119. The third optical sensor 208 therefore rotates with the reel 116 and, hence, the orientation of the third field of view 209 depends on the rotational position of the reel 116. The third optical sensor 208 may be configured to monitor a region in front of the header 110 or at least one component of the header 110, such as the conveyor 118 or the cutter bar 114. For example, in a first rotational position of the reel 116, the third field of view 209a may be directed towards the front of the header 110. In a second rotational position of the reel 116, the third field of view 209b may be directed towards the conveyor 118, and, in a third rotational position of the reel 116, the third field of view 209c may be directed towards the cutter bar 114. The reel 116 may be partially located in the third field of view 209.

According to the present invention, the at least one optical sensor 204, 206, 208 is configured to capture optical data in response to a trigger signal associated with the output signal of the rotational reel position sensor 202, the output signal being indicative of at least one rotational position of the reel 116. By capturing optical data based on the output signal, the captured optical data can be synchronized with the reel position. Thus, it can be achieved that the reel 116 and in particular the tine bars 117 are arranged in specific positions when the at least one optical sensor 204, 206, 208 is triggered and, therefore, do always appear in the same static position in the captured optical data. In case of a reel mounted optical sensor 208 rotating with the reel 116, such as the third optical sensor 208, it can be achieved that, on the one hand, different areas of interest may be captured by a single optical sensor 208 and, on the other hand, the field of view of such sensor is precisely directed towards the area or component of interest.

For example, the first and second optical sensors 204, 206 shown in Fig. 2 may only be triggered to capture optical data when the reel 116 is in a rotational position, in which one of the tine bars 117 is arranged in the first angular position A1. Therefore, if the tine bar 117b arranged in the first angular position A1 is within the first and second field of view, the reel 116 and the tine bar 117 would be arranged in the same position in each frame captured by the optical sensor 204, 206.

As regards the third optical sensor 208 shown in Fig. 3, the optical sensor 208 may only be triggered to capture optical data when the reel 116 is in one of the first, the second or the third rotational position described above. Therefore, the third field of view 209 (209a, 209b, 209c) would only capture optical data of an area of interest from the very same perspective. By triggering the third optical sensor 208 in more than one predetermined rotational position of the reel 116, such as any combination of the first, the second or the third rotational position, multiple sensor views corresponding to the respective field of view 209a, 209b, 209c can be generated by a single sensor 208.

Further, the system 200 preferably comprises a control unit 212, which is communicatively coupled to the at least one optical sensor 204, 206, 208 and the rotational reel position sensor 202. The control unit 212 is configured to trigger the at least one optical sensor 204, 206, 208 by providing the trigger signal based on the output signal received from the rotational reel position sensor 202. Utilizing the control unit 212 allows more flexibility in triggering the at least one optical sensor 204, 206, 208 based on the rotational position the reel 116. This may be particularly beneficial if the rotational position of the reel 116 detected by the rotational reel position sensor 202 does not correspond to the position, in which the at least one optical sensor 204, 206, 208 is to be triggered.

For example, the rotational reel position sensor 202 detects tine bar 117d in front of the sensor 202 corresponding to the first angular position A1 of the tine bar 117b and provides a corresponding output signal. The at least one optical sensor 204, 206 may directly be provided with the trigger signal, such that the tine bar 117b is in the first angular position A1 when the at least one optical sensor 204, 206 captures optical data. Alternatively, it may be desirable to defer triggering the at least one optical sensor 204, 206, such that the tine bar 117b is for example arranged in a second angular position A2 when the at least one optical sensor 204, 206 captures optical data. In general, the control unit 212 may therefore be configured to provide the trigger signal to the at least one optical sensor 204, 206, 208 after a delay. In other words, the control unit 212 may add a delay to the output signal in order to generate the trigger signal. Depending on the delay, the position of the reel 116 within the field of view 205, 207 of the first and second optical sensor 204, 206 or the orientation of the third field of view 209a, 209b, 209c can be varied as desired. The flexibility derived from adding a delay by the control unit may 212 be used in different ways as described below.

An optimal rotational position of the reel 116 may be defined for each of the at least one optical sensor 204, 206, 208 depending on the structure of the reel 116 and on the orientation of the field of view 205, 207, 209 of the at least one optical sensor 204, 206, 208. The optimal rotational position of the reel 116 may be a position in which the reel 116 or a component thereof, such as the tine bars 117, do not or only as little as possible appear in the field of view 205, 207 of the first and second optical sensor 204, 206 or in which the field of view 209 of the third optical sensor 208 is directed towards the area or component of interest of which optical data is to be captured.

In the example shown in Fig. 2, the reel 116 is arranged in a rotational position in which the tine bar 117b is arranged in the first angular position A1. As can be seen, the first and second fields of view 205, 207 extend through the reel 116 between tine bars 117a, 117b and 117c. In this rotational position of the reel 116, the first and second optical sensors 204, 206 are able to look through the reel 116 without the reel 116 or its tine bars 117 substantially interfering with the first and second field of view 205, 207. A rotational position of the reel 116 in which one of the tine bars 117 is arranged in the first angular position A1 with respect to the reel axis may therefore be considered as an optimal rotational position of the reel 116 for the first and second optical sensor 204, 206. In contrast, upon further rotation of the reel 116 at least one of the tine bars 117 would be arranged in the first and second field of view 205, 207.

Referring now to Fig. 3 again, the third field of view 209 of the third optical sensor 208 may be one of the field of views 209a, 209b and 209c indicated in Fig. 3 and directed towards the respective one of the front of the header 110, the conveyor 118 or the cutter bar 114. Hence, the third field of view 209 is precisely directed towards the area of interest. A rotational position of the reel 116 in which the tine bar 117b is arranged in the first angular position A1 with respect to the reel axis may therefore be considered as an optimal rotational position of the reel 116 for the third optical sensor 208. In contrast, upon further rotation of the reel 116 the third field of view 209 would be directed towards an area, which is not relevant for monitoring by the third optical sensor 208. For each of the third fields of view 209a, 209b, 209c indicated in Fig. 3 a corresponding rotational position of the reel 116 may be defined.

In Fig. 2 and 3, the rotational position of the reel 116 detected by rotational reel position sensor 202 corresponds to an optimal rotational position of the reel 116. Consequently, the output signal of the rotational reel position sensor 202 indicates the optimal rotational position of the reel 116 and, based on the output signal, the at least one optical sensor 204, 206, 208 may directly be triggered, e.g. by the control unit 212 providing the trigger signal.

Depending on the structure of the reel 116, e.g. its size and the number and arrangement of the tine bars 117, on the position of the at least one optical sensor 204, 206, 208 as well as the orientation of its field of view 205, 207, 209, and the position of the rotational reel position sensor 202, it may not always be possible to detect the optimal rotational position of the reel 116 by the rotational reel position sensor 202. That is, the optimal rotational position may differ from the detected rotational position by a certain angle. In this case, the control unit 212 may be configured to provide the trigger signal after a delay depending on the optimal rotational position, i.e. to add the delay to the output signal in order to generate trigger signal. More particularly, the delay may depend on the rotational speed of the reel 116 and an angular distance between the detected rotational position of the reel 116 and the optimal rotational position of the reel 116. In this way, the at least one optical sensor 204, 206, 208 can be triggered in the optimal rotational position of the reel 116 although the rotational reel position sensor 202 may not detect the optimal rotational position of the reel 116.

Moreover, the delay may be used to adapt the trigger signal to a horizontal and/or vertical position of the reel 116, which may change during operation or between a first and a second harvesting operation.

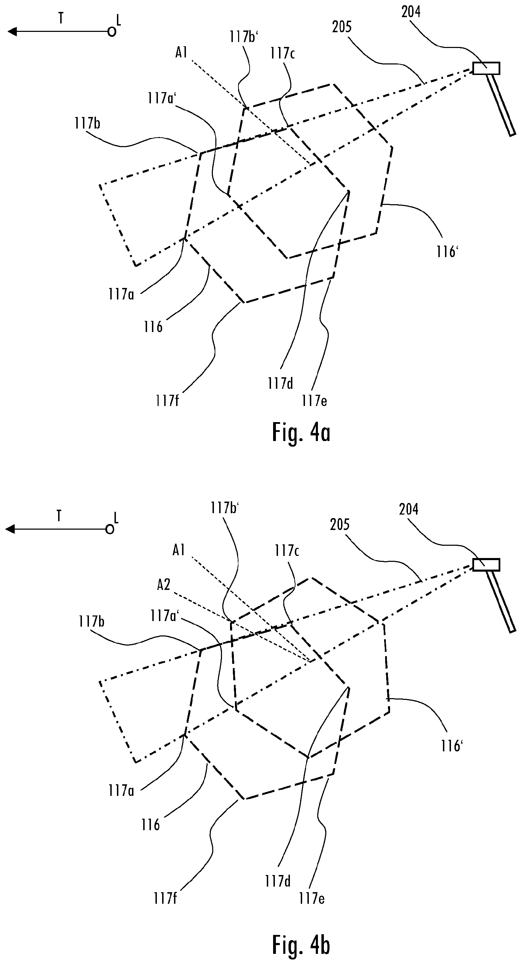

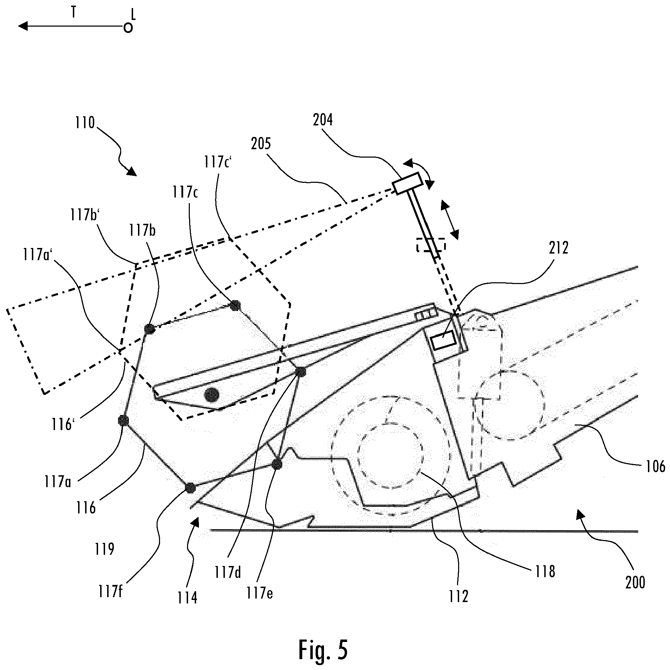

In Fig. 4a, 4b and 5, the reel 116 is displaced with respect to the initial position shown in Fig. 2 and 3. The initial position of the reel and tine bars is indicated by reference numbers 116 and 117, wherein a displaced position is indicated by reference numbers 116' and 117'. For the sake of clarity, only the reel 116 and the first optical sensor 204 are shown in Fig. 4a, 4b and only the header 110 and the first optical sensor 204 are shown in Fig. 5. However, the teachings described under reference to Fig. 4a, 4b and 5 apply to the header 110 and any of the optical sensors 204, 206, 208 described above in an analogous manner.

Referring now to Fig. 4a and 4b, the reel 116 has been moved from its initial position 116 to a displaced position 116' in the horizontal and vertical direction. In this embodiment, the first optical sensor 204 is fixedly mounted and the position and orientation of first field of view 205 therefore remains unchanged as the reel 116 changes its position. It has to be noted that the position and/or orientation of the at least one optical sensor 204 may also be adjustable as described with reference to Fig. 5 below. As shown in Fig. 4a, when the reel 116' is arranged in the displaced position and in a rotational position in which the tine bar 117b' is in the first angular position A1 with respect to the reel axis, the tine bar 117a' is now arranged within the first field of view 205 of the first optical sensor 204. Thus, the tine bars 117' would appear in the captured optical data if the first optical sensor 204 is triggered in a rotational position of the reel 116' corresponding to the first angular position A1. It may therefore be desirable to adapt the trigger signal.

In Fig. 4b, the reel 116' is in a rotational position in which the tine bar 117b' is arranged in the second angular position A2. In this rotational position of the reel 116', neither tine bar 117a' nor any other of the tine bars 117' is arranged within the first field of view 205 of the first optical sensor 204. Therefore, this rotational position may be considered as an optimal rotational position of the reel 116' with respect to the first field of view 205 of the first optical sensor 204.

If the rotational reel position sensor 202 is configured to detect a rotational position of the reel 116' corresponding to the first angular position A1, as described above, the control unit 212 may be configured to provide the trigger signal with a delay. The delay may be determined based on the angle (angular displacement) between the first and second angular positions A1, A2 and the rotational speed of the reel 116'. In this way, the at least one optical sensor 204 can be triggered to capture optical data in a rotational position of the reel 116' corresponding to the second angular position A2 of a tine bar 117'. Consequently, the moment of triggering the at least one optical sensor 204 may be varied as desired by adapting the delay accordingly.

Moreover, the position and/or orientation of the at least one optical sensor 204, 206, 208, such as the first optical sensor 204 shown in Fig. 5, may be adjustable. In particular, the position of the at least one optical sensor 204 in the vertical direction may be adjustable, e.g. by mounting the at least one sensor 204 on an extendable support or the like. To adjust the orientation of the at least one optical sensor 204 and its field of view 205, the at least one optical sensor 204 may be pivotally mounted. More specifically, the at least one optical sensor 204 may be pivotally mounted about a horizontal axis parallel to the transverse direction L of the header 110. As a result, the position and orientation of the at least one optical sensor 204 may be adapted depending on the position of the reel 116 in the vertical and/or horizontal direction.

For example, if the reel 116 is moved from its initial position 116 to a displaced position 116' as shown in Fig. 5, the position and/or orientation of the first optical sensor 204 may be adapted, such that the first field of view 205 is directed through the reel 116' between tine bars 117a', 117b' and 117c' when the reel 116' is arranged in a rotational position corresponding to the first angular position A1 of tine bar 117b'. Even more preferably, the position and orientation of the first optical sensor 204 may be adjusted such that a focal point of the first optical sensor 204 in the initial position and a focal point of the first optical sensor 204 in the displaced position coincide.

Adjusting the position and/or orientation of the at least one optical sensor 204, 206, 208 may be an alternative or an additional measure for optimizing the orientation of the field of view of the at least one optical sensor 204, 206, 208 with respect to the reel 116.

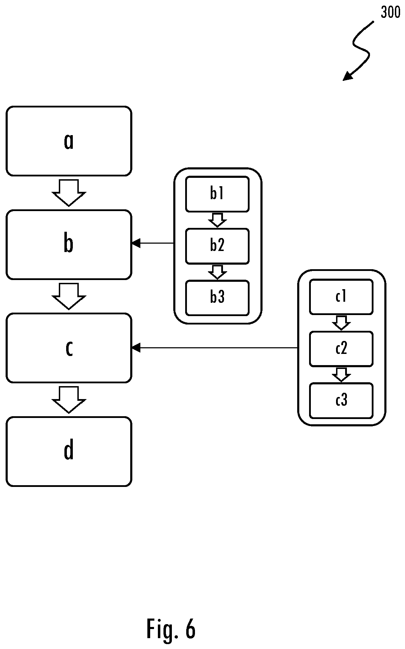

An exemplary embodiment of a method 300 according to the present invention is described with reference to Fig. 6. The method 300 may be performed by the system 200 or agricultural vehicle 100 described above. However, it is apparent that the method 300 may also be performed by any other system suitable to realize the method as defined herein.

During a harvesting operation, the header 110 configured for use with the agricultural vehicle 100 is operated (step a), wherein the reel 116 of the header 110 rotates around the reel axis. While the reel 116 is rotating, a rotational position of the reel 116 is detected by the rotational reel position sensor 202 (step b, b1) as described above. The rotational reel position sensor 202 may generate the output signal indicative of a rotational position of the reel 116 (step b2) and provide the output signal to the control unit 212 (step b3). For example, the rotational reel position sensors 202 detects at least one or all of the tine bars 117 in a predetermined angular position. The output signal therefore indicates that a tine bar 117 is positioned in the predetermined angular position, e.g. by a pulse signal.

Then, the at least one optical sensor 204, 206, 208 is triggered when the reel 116 is arranged in at least one predetermined rotational position (step c). For example, the at least one optical sensor 204, 206, 208 is triggered when the tine bar 117b is in the first rotational position A1. To trigger the at least one optical sensor 204, 206, 208, the control unit 212 may generate a trigger signal based on the output signal (step c1) and provide the output signal to the at least one optical sensor 204, 206, 208 thereby triggering the at least one optical sensor 204, 206, 208 (step c2). Optionally, the control unit 212 may trigger the at least one optical sensor 204, 206, 208 with a delay (step c3) to adapt the moment of triggering the at least one optical sensor 204, 206, 208 as desired. The control unit 212 may determine the delay based on a horizontal and/or vertical position of the reel 116 or on an optimal rotational position of the reel 116, as described above. When the at least one optical sensor 204, 206, 208 is triggered, it captures optical data, such as image data, within its field of view 205, 207, 209. In this way, capturing optical data by the at least one optical sensor 204, 206, 208 is synchronized with the rotational position of the reel 116 thereby facilitating data processing.

It is to be understood that the steps of the method 300 performed by the control unit 212 may be performed upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the control unit described herein may be implemented in software code or instructions which are tangibly stored on a tangible computer readable medium. The electronic control unit loads the software code or instructions via a direct interface with the computer readable medium or via a wired and/or wireless network. Upon loading and executing such software code or instructions by the electronic control unit, the electronic control unit may perform any of the functionality described herein.

The term "software code" or "code" used herein refers to any instructions or set of instructions that influence the operation of a computer or electronic control unit. They may exist in a computer-executable form, such as machine code, which is the set of instructions and data directly executed by a computer's central processing unit or by an electronic control unit in a human-understandable form, such as source code, which may be compiled in order to be executed by a computer's central processing unit or by an electronic control unit, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by an electronic control unit.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein but is intended to include all changes and modifications that are within the scope of the invention as defined by the accompanying claims.

## Claims

1. A system (200) for sensor-based monitoring of a harvesting operation, the system (200) comprising:
a header (110) comprising a frame (112) and a reel (116) rotatably supported relative to the frame (112);
at least one optical sensor (204, 206, 208) configured to capture optical data within a field of view (205, 207, 209) of the at least one optical sensor (204, 206, 208), wherein the reel (116) is partially arranged within or movable through the field of view (205, 207, 209) of the at least one optical sensor (204, 206, 208); and
a rotational reel position sensor (202) configured to detect a rotational position of the reel (116);
**characterized in that**
the system (200) is configured to trigger the at least one optical sensor (204, 206, 208) in a predetermined rotational position of the reel (116) based on the detected rotational position.

2. The system (200) according to claim 1, **characterized in that** an output signal of the at least one rotational reel position sensor (202) is indicative of a rotational position of the reel (116) and the at least one optical sensor (204, 206, 208) is configured to capture optical data in response to a trigger signal associated with the output signal of the rotational reel position sensor (202).

3. The system (200) according to claim 2, **characterized in that** the system (200) further comprises a control unit (212) communicatively coupled to the at least one optical sensor (204, 206, 208) and the rotational reel position sensor (202), wherein the control unit (212) is configured to trigger the at least one optical sensor (204, 206, 208) by providing the trigger signal based on the output signal of the rotational reel position sensor (202).

4. The system (200) according to claim 3, **characterized in that** the control unit (212) is configured to receive the output signal of the rotational reel position sensor (202) and to provide the trigger signal to the at least one optical sensor (204, 206, 208) after a delay depending on a horizontal and/or vertical position of the reel (116).

5. The system (200) according to any of the preceding claims, **characterized in that** an optimal rotational position of the reel (116) is defined for each of the at least one optical sensor (204, 206, 208) depending on the structure of the reel (116) and on the field of view (205, 207, 209) of the at least one optical sensor (204, 206, 208), wherein the trigger signal is associated with the optimal rotational position of the reel (116).

6. The system (200) according to any of the preceding claims, **characterized in that** the reel (116) comprises a plurality of tine bars (117) extending in a transverse direction (L) of the header (110), wherein the tine bars (117) of the plurality of tine bars (117) are spaced apart from each other in a circumferential direction of the reel (116), wherein the output signal of the rotational reel position sensor (202) is indicative of an angular position (A1) of at least one tine bar of the plurality of tine bars (117).

7. The system (200) according to any of the preceding claims, **characterized in that**:
the at least one optical sensor (204, 206) is mounted on the header (110) and/or an agricultural vehicle (100) carrying the header (110), wherein the field of view (205, 207) of the at least one optical sensor (204, 206) is directed towards a front of the header (110); or
the at least one optical sensor (208) is mounted on the reel (116), wherein the field of view (209) of the at least one optical sensor (208) is directed in a radial direction of the reel (116).

8. The system (200) according to claim 7, **characterized in that** the at least one optical sensor (208) is mounted on the reel (116) and the control unit (212) is configured to trigger the at least one optical sensor (208) in a first rotational position of the reel (116) and in a second rotational position of the reel (116), wherein the orientation of the field of view (209) of the at least one optical sensor (208) in the first rotational position of the reel (116) is different from the orientation of the field of view (209) in the second rotational position of the reel (116).

9. The system (200) according to any of the preceding claims, **characterized in that** the at least one optical sensor (204, 206, 208) is one of a radar sensor, a lidar sensor, a laser sensor, a camera.

10. The system (200) according to any of the preceding claims, **characterized in that** the rotational reel position sensor (202) is assigned to a shaft (119) of the reel (116); or
the rotational reel position sensor (202) is arranged adjacent to an outer circumference of the reel (116) and is configured to detect a tine bar (117) of the reel (116) passing by the rotational reel position sensor (202).

11. The system (200) according to any of the preceding claims, **characterized in that** the rotational reel position sensor (202) comprises one or a combination of an encoder, an inductive sensor, a magnetic sensor, an optical sensor or a mechanical sensor.

12. An agricultural vehicle (100), in particular a combine (100), comprising the system (200) according to any of the claims 1 to 11.

13. A method (300) for sensor-based monitoring of a harvesting operation, the method (300) comprising the steps of:
operating a header (110) and thereby rotating a reel (116) of the header (110) around a reel axis;
detecting a rotational position of the reel (116) by a rotational reel position sensor (202) while the reel (116) is rotating;
triggering at least one optical sensor (204, 206, 208) when the reel (116) is arranged in at least one predetermined rotational position; and
capturing optical data by the at least one optical sensor (204, 206, 208) when triggered.

14. The method (300) according to claim 13, **characterized in that** the method (300) comprises the steps of:
generating an output signal indicative of a rotational position of the reel (116) detected by the rotational reel position sensor (202) and providing the output signal to a control unit (212);
generating a trigger signal based on the output signal by the control unit (212) and providing the trigger signal to the at least one optical sensor (204, 206, 208) thereby triggering the at least one optical sensor (204, 206, 208); and
capturing optical data by the at least one optical sensor (204, 206, 208) in response to the trigger signal;
wherein the control unit (212) provides the trigger signal to the at least one optical sensor (204, 206, 208) with a delay.

15. The method (300) according to claim 14, **characterized in that** the control unit (212) determines the delay based on:
a horizontal and/or vertical position of the reel (116); or
an optimal rotational position of the reel (116) defined for the at least one optical sensor (204, 206, 208).
